# EUROPÄISCHE PATENTSCHRIFT

(11) **EP 1 232 073 B1**
(45) Veröffentlichungstag und Bekanntmachung des Hinweises auf die Patenterteilung: **25.02.2004**
(21) Anmeldenummer: 00981254.6
(22) Anmeldetag: 13.11.2000
(51) Int. Cl.: B60R 16/02

(54) **ZWEI-BATTERIENSYSTEM**
DUAL BATTERY SYSTEM
SYSTEME A DEUX BATTERIES

(30) Priorität: 15.11.1999 DE 19955721
(43) Veröffentlichungstag der Anmeldung: 21.08.2002
(73) Patentinhaber: Volkswagen AG, 38436 Wolfsburg (DE)
(72) Erfinder: URLASS, Thorsten, 38474 Tülau (DE); REVERMANN, Klaus, 38556 Bokensdorf (DE); BAUMGARTH, Marco, 38106 Braunschweig (DE)
(74) Vertreter: Effert, Bressel und Kollegen
(86) Internationale Anmeldenummer: PCT/EP2000/011215
(87) Internationale Veröffentlichungsnummer: WO 2001/036232

(56) Entgegenhaltungen:
- DE-A- 3 007 941
- DE-A- 19 645 944
- FR-A- 2 739 733
- FR-A- 2 749 814
- US-A- 5 977 652

## Beschreibung

Die Erfindung betrifft ein Zwei-Batteriensystem und ein Verfahren zur Ansteuerung des Zwei- Batteriensystems.

Ein Zwei-Batteriensystem mit einer Bordnetzbatterie und einer Starterbatterie ist aus der DE 38 41 769 bekannt, die bei aktivem Generator miteinander verbunden sind. Dies hat bei geringer Generatorstromzufuhr den Nachteil, daß die Bordnetzbatterie durch Ladungsausgleich auf Kosten der Starterbatterie geladen wird, wenn der Ladezustand der Bordnetzbatterie schlechter als der der Starterbatterie ist. Beim bekannten Bordnetz ist auch zwischen der Bordnetzbatterie mit den Bordnetzverbrauchern und dem übrigen Teil des Bordnetzes ein Schalter angebracht, der bei Generatorstillstand geöffnet wird, sobald die Starterbatteriespannung unter einen zulässigen Grenzwert sinkt. Diese Maßnahme schützt die Starterbatterie nur bei Generatorstillstand vor einer vollständigen Entladung und läßt zudem eine Teilentladung der Starterbatterie zu. Durch diese schlechte Ausgangsbedingung wird beim Fahrtbeginn die Belastung der Starterbatterie verstärkt, wenn ein Ladungsausgleich der beiden Batterien zu Ungunsten der Starterbatterie stattfindet. Dies kann im Extremfall zur vollständigen Entladung oder Zerstörung der Starterbatterie führen.

Aus der DE 40 28 242 ist ein Zwei-Batteriensystem bekannt, bei dem bei Verbindung zwischen Starterbatterie und Bordnetzbatterie unabhängig vom Fahrzustand auftrennbar ist, wenn anderenfalls die Bordnetzbatterie aus der Starterbatterie aufgeladen werden würde. Die beiden Batterien sind miteinander verbunden, wenn die Bordnetzbatteriespannung größer ist als die Starterbatteriespannung. Ist die Spannung der Bordnetzbatterie kleiner als die der Starterbatterie, werden die beiden Batterien voneinander getrennt. Die Trennung kann unterschiedlich, beispielsweise durch Abschalten der Starterbatterie vom übrigen Bordnetz vorgenommen werden. Auf diese Weise wird die Starterbatterie nicht durch eine entladene Bordnetzbatterie belastet, der Generator kann im Arbeitsmodus die wichtigsten Verbraucher versorgen und gleichzeitig die Bordnetzbatterie aufladen. Die beiden Batterien können auch durch ein Abschalten der Bordnetzbatterie vom übrigen Bordnetz getrennt werden. Bei einer gegebenenfalls dann bestehenden Verbindung zwischen Generator und Starterbatterie kann die Starterbatterie aufgeladen werden.

Ein allgemeines Problem bei den Zwei-Batteriesystemen ist die Anordnung der Starterbatterie im Kraftfahrzeug bei begrenztem Bauraum. Um bei Unfällen die Brandgefahr aufgrund elektrischer Kurzschlüsse zu verhindern, muß die Starterleitung, über die der Starter mit der Starterbatterie permanent elektrisch verbunden ist, durch crashsichere Zonen im Kraftfahrzeug gelegt werden. Dies gilt auch für die Starterleitung in Ein-Batteriesystemen. Alternativ sind bereits pyrotechnische Batterieklemmen vorgeschlagen worden, die vor oder während eines Unfalls von den Batterien irreversibel abgesprengt werden und so den elektrischen Stromfluß unterbrechen. Die Ansteuerung der pyrotechnischen Klemmen erfolgt dabei meist über eine Precrashsensorik, die beispielsweise die Signale eines Airbagsteuergerätes auswertet. Neben den hohen Kosten ist an den pyrotechischen Klemmen deren aufwendige Ansteuerung nachteilig, da eine versehentliche Auslösung vermieden werden muß, da ansonsten das Kraftfahrzeug nicht mehr gestartet werden kann. Generell ist die Irreversibilität nachteilig, da nach jeder Auslösung die Klemmen ausgetauscht werden müssen.

Aus der FR-2739733 ist ein Zwei-Batteriensystem gemäß dem Oberbegriff von Anspruch 1 bekannt, umfassend eine Starterbatterie und eine Bordnetzbatterie, einen Starter und elektrische Verbraucher, die in startrelevante Verbraucher und Bordnetzverbraucher unterteilt sind, wobei zwischen dem Starter und der Starterbatterie ein Startschalter.angeordnet ist. Des weiteren ist zwischen den startrelevanten Verbrauchern und der Starterbatterie bzw. Bordnetzbatterie ein Umschalter angeordnet, mittels dessen die startrelevanten Verbraucher jeweils einer Batterie zugeordnet werden. Weiter ist zwischen der Starterbatterie und der Bordnetzbatterie ein Element angeordnet, das einen Stromfluss von der Starterbatterie zur Bordnetzbatterie oder den Bordnetzverbrauchern verhindert. Dabei werden die startrelevanten Verbraucher bei ausreichend geladener Bordnetzbatterie von dieser während des Startvorganges versorgt. Im Falle einer nicht ausreichend geladenen Bordnetzbatterie werden hingegen die startrelevanten Verbraucher der Starterbatterie zugeordnet.

Aus der FR-2749814 ist eine Vorrichtung zur Stromversorgung eines Fahrzeugs bekannt, ausgerüstet mit einem Innenverbrennungsmotor mit zwei elektrischen Akkus, wobei der erstere, die Starterbatterie, dazu gedacht ist, den Anlasser des Motors zu versorgen und ein zweiter, die Hauptbatterie, die übrigen Stromabnehmer versorgt; ein Starterschalter, betätigt durch den Zündschlüssel des Fahrzeugs, und ein System zur Ladungsverteilung bewirken die Verbindung der Batterien miteinander oder deren Trennung, je nach deren Ladezustand und dem Strombedarf der verschiedenen Stromabnehmer des Fahrzeugs, wobei der besagte Starterschalter über eine Eingangsklemme, angeschlossen an die Hauptbatterie, und mindestens eine erste Ausgangsklemme aufweist, welche die übrigen Stromabnehmer speist, sowie eine zweite Ausgangsklemme (+DEM), die insbesondere einen Magnetschalter versorgt, der die Stromversorgung des Anlassers steuert, wobei das besagte Ladungsverteilungssystem mit elektromagnetischen Verzweigungen sowie mit Mitteln zur Spannungsmessung zusammenwirkt, wodurch die sukzessive Messung der Spannung an den Klemmen der Starter- und der Hauptbatterie möglich wird, wenn der besagte Starterschalter die erwähnte Eingangsklemme mit der zweiten Ausgangsklemme (+DEM) verbindet, und zwar derart, dass eine Verbindung zwischen der Starterbatterie und der Hauptbatterie geschaffen wird, wenn die letztere entleert sein sollte und somit der Fahrzeugmotor gestartet werden kann.

Der Erfindung liegt daher das technische Problem zugrunde, ein Zwei-Batteriensystem und ein Verfahren zur dessen Ansteuerung zu schaffen, mittels derer ein verbessertes Start- und Lademanagement möglich ist. Ein weiteres technisches Problem ist die einfache und kostengünstige Reduzierung der Brandgefahr.

Die Lösung des technischen Problems ergibt sich durch die Gegenstände mit den Merkmalen der Patentansprüche 1 und 10. Weitere vorteilhafte Ausgestaltungen der Erfindung ergeben sich aus den Unteransprüchen.

Hierzu wird zwischen den startrelevanten Verbrauchern und der Starterbatterie ein erstes, elektrisch vollsperrbares Schaltelement und zwischen der Bordnetzbatterie und den startrelevanten Verbrauchern ein zweites, elektrisch vollsperrbares Schaltelement angeordnet, wobei zwischen Starterbatterie und Bordnetzbatterie ein Element angeordnet ist, das einen Stromfluß von der Starterbatterie zur Bordnetzbatterie und den Bordnetzverbrauchern verhindert. Über die Schaltelemente sind die startrelevanten Verbraucher wechselseitig der Starterbatterie oder der Bordnetzbatterie zuordenbar, wohingegen über das Element eine Entladung der Starterbatterie durch eine entladene Bordnetzbatterie verhindert wird. Unter elektrisch vollsperrbar wird dabei ein Schaltelement verstanden, durch das im offenen bzw. gesperrten Zustand kein nennenswerter elektrischer Strom fließt. Dies sind insbesondere alle galvanischtrennenden Schalter wie beispielsweise Relais. Einfache Leistungs-MOSFETs sind hierfür hingegen nicht geeignet, da diese über eine technologisch bedingte parasitäre Diode nicht vollständig sperren. Prinzipiell könnten jedoch zwei gegeneinander verschaltete Leistungs-MOSFETs als Schaltelement verwendet werden, da die Diodensperrströme vemachlässigbar sind.

Das Element zwischen Starterbatterie und Bordnetzbatterie kann selbststeuernd als Diode oder als ansteuerbarer Schalter oder Relais ausgebildet sein.

Die startrelevanten Verbraucher sind im Ruhezustand einer Batterie zugeordnet, wobei vor Einleitung eines Startvorganges die Ladezustände der beiden Batterien erfasst werden und die startrelevanten Verbraucher in Abhängigkeit der Ladezustände der beiden Batterien einer Batterie zugeordnet werden, wobei die Zuordnung der startrelevanten Verbraucher durch die ersten und zweiten elektronisch vollsperrbaren Schaltelemente erfolgt.

Zwischen dem Starter und der Starterbatterie ist ein erster Startschalter und zwischen dem Starter und der Bordnetzbatterie ist ein zweiter Startschalter angeordnet.

Nach Beendigung des Startvorganges sind die startrelevanten Verbraucher der Bordnetzbatterie zugeordnet, wobei bei notwendigen Schaltvorgängen des ersten und zweiten elektrisch vollsperrbaren Schaltelementes nach der Startphase das erste Schaltelement erst nach Schließen des zweiten Schaltelementes geöffnet wird.

In einer bevorzugten Ausführungsform sind die vollsperrbaren Schaltelemente als Relais ausgebildet.

In einer weiteren bevorzugten Ausführungsform ist das Relais als Öffner und das zweite Relais als Schließer ausgebildet.

Der erste und zweite Startschalter sind vorzugsweise als elektronische Polklemmen ausgebildet.

Durch die Anordnung mindestens einer elektronischen Polklemme zwischen dem Starter und der Starterbatterie in einem Zwei-Batteriensystem, über die die Starterleitung spannungslos schaltbar ist, kann die im Regelfall spannungslose Starterleitung beliebig im Kraftfahrzeug angeordnet werden, ohne eine Brandgefahrenquelle darzustellen. Dies vergrößert die Freiheitsgrade bei der Verkabelung, da Bauraumrestriktionen weitgehend entfallen. Hierzu wird die elektrische Polklemme nur in der unmittelbaren Startphase durchgeschaltet und ansonsten im Sperrzustand betrieben. In Abhängigkeit von dem weiteren Schaltungskonzept muß sichergestellt werden, daß in Zwei-Batteriesystemen auch die Bordnetzbatterie, durch eine elektronische Polklemme von der Starterleitung getrennt werden kann, so daß die Spannungslosigkeit der Starterleitung gewährleistet ist. Je nach Schaltungskonzept können dabei die elektronischen Polklemmen gleichartig oder verschieden ausgebildet sein. Ein weiterer Vorteil ist, daß durch die elektronischen Polklemmen in der Standphase die Starterbatterie mit den startrelevanten Verbrauchern vom übrigen Bordnetz elektrisch getrennt ist, so daß die Starterbatterie über längere Standphasen eine ausreichende Startkapazität zur Verfügung stellen kann.
Verfahrensmäßig wird dabei bei der Erfassung eines beabsichtigten Startvorganges ein Startsignal (Klemme (50)-Signal) erzeugt, über das die elektronischen Polklemmen in der Startphase durchgeschaltet werden und nach erfolgtem Start wieder gesperrt werden. Ist das Kraftfahrzeug mit einem mechanischen Zündanlaßschloß ausgebildet, so wird das Klemme (50)-Signal unmittelbar durch die Drehung des Zündschlüssels erzeugt und der Startvorgang unmittelbar eingeleitet, falls die Starterbatterie und gegebenenfalls die Bordnetzbatterie ausreichend Spannung zur Verfügung stellen können. Ist das Kraftfahrzeug hingegen mit einem elektronischen Zündanlaßschloß verbunden, so wird zunächst durch ein Startfreigabesteuergerät überprüft, ob die startrelevanten Verbraucher eine ausreichende Versorgungsspannung erhalten. Ist dies der Fall, so erzeugt das Startfreigabesteuergerät ein Klemme (50)-Signal und die elektronische Polklemme der Starterbatterie und gegebenenfalls der Bordnetzbatterie wird durchgeschaltet, so daß über die nun spannungführende Startedeitung der Starter mit einer Starterspannung versorgt wird und den Motor anwirft. Anschließend werden die elektronischen Polklemmen wieder gesperrt und die Starterleitung spannungslos geschaltet. Unabhängig von der Ausbildung des Zündanlaßschloßes wird so sichergestellt, daß nur in der unmittelbaren Startphase die Starterleitung spannungsführend ist und ansonsten spannungslos geschaltet ist.

In einer weiteren bevorzugten Ausführungsform sind die Hochlaststartverbraucher, die nur während der Startphase oder geringe Zeit nach dem erfolgten Start aktiv sind, fest der Starterbatterie zugeordnet, so daß deren Strom nicht über die Relais fließen muß und diese somit leistungsmäßiger geringer dimensionierbar und somit kostengünstiger sind.

Vorzugsweise ist der Generator als steuerbarer Generator ausgebildet, der über einen steuerbaren Regler seine Spannung einstellen kann. Dadurch kann dem Generator von dem die Relais ansteuernden Steuergerät vorgegeben werden, daß dieser seine Ausgangsspannung vor einem Schaltervorgang der Relais an die Starterbatteriespannung anpaßt, so daß im Schaltervorgang keine hohen Lastströme zu schalten sind.

Vorzugsweise sind die elektronischen Polklemmen als schaltbare Leistungshalbleiter ausgebildet, über die entsprechend große Stromstärken mit kleinen Steuerströmen schaltbar sind. In einer weiteren bevorzugten Ausführungsform ist die elektronische Polklemme als CMOS-FET ausgebildet, so daß im wesentlichen nur bei den Schaltungsvorgängen eine elektrische Verlustleistung auftritt. Um entsprechende Gatespannungen zu erzeugen, ist der FET mit einer Ladepumpe ausgebildet, die bis zu einer Bordnetzspannung von beispielsweise 3 V arbeitet und die entsprechende Gatespannung aufbaut. Im stationären Fall hingegen ist der Ruhestrom durch den CMOS-FET vernachlässigbar, so daß die Batterien nicht belastet werden. Derartige CMOS-FETs sind mit einem Übergangswiderstand im durchgeschalteten Zustand von 0,5 B 0,6 mΩ behaftet, so daß der Spannungsabfall bei 1200 A nur bei 0,6 B 0,72 V liegt. Beim Kaltstart liegt der Widerstand sogar nur bei ungefähr 0,4 mΩ, so daß der Spannungsabfall nur 0,48 V beträgt Somit steht nahezu die gesamte Batteriespannung dem Starter zur Verfügung.

Durch die elektronische Polklemme zwischen Starter und Starterbatterie kann bei entladener Starterbatterie ein Fremdstart im Motorraum nicht mehr erfolgen. Hierzu wird der Starterbatterie daher ein Abgriff, vorzugsweise in Form einer Stromschiene zugeordnet, über die dann eine externe Batterie an die Starterbatterie geschaltet werden kann. Dieser Abgriff bildet einen Fremdstarthilfepunkt, der an beliebiger Stelle im Kraftfahrzeug angeordnet sein kann, vorzugsweise jedoch in unmittelbarer Umgebung der Starterbatterie angeordnet ist.

Die Erfindung wird nachfolgend anhand eines bevorzugten Ausführungsbeispieles näher erläutert. Die Fig. zeigen:
- Fig. 1: ein Prinzipschaltbild eines Zwei-Batteriensystems mit zwei elektronischen Polklemmen und
- Fig. 3: ein Prinzipschaltbild eines Zwei-Batteriensystems gemäß Fig. 1 mit standardmäßiger Zuordnung der startrelevanten Verbraucher zur Bordnetzbatterie.

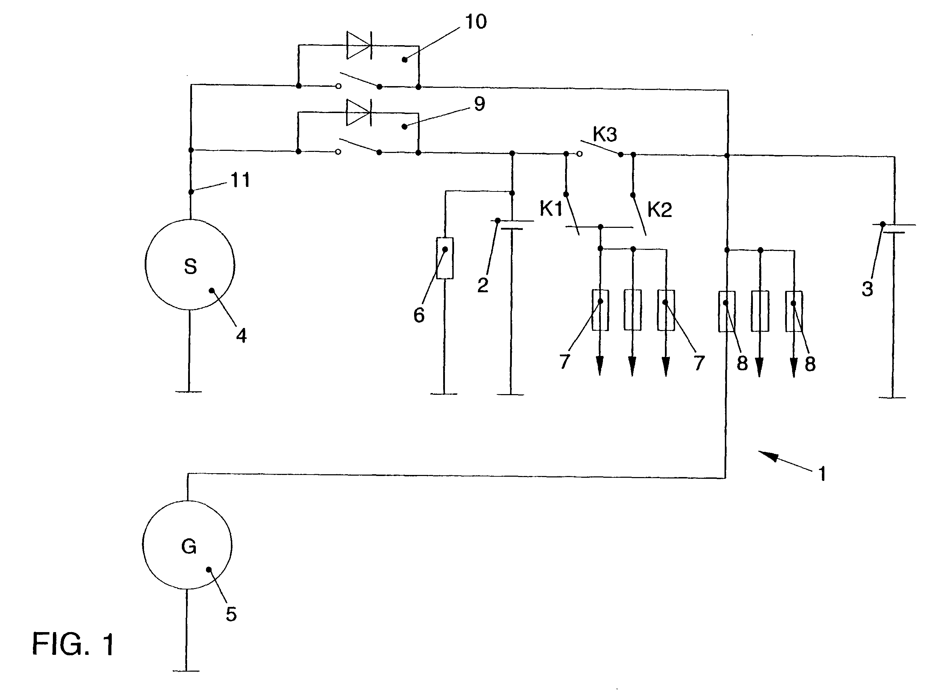

In der Fig. 1 ist das Prinzipschaltbild eines Zwei- Batteriensystems 1 dargestellt. Das Zwei- Batteriensystem 1 umfaßt eine Starterbatterie 2, eine Bordnetzbatterie 3, einen Starter 4, einen Generator 5, Hochlaststartverbraucher 6, startrelevante Verbraucher 7, Bordnetzverbraucher 8, zwei elektronische Polklemmen 9, 10 und drei Relais K1-K3. Die Hochlaststartverbraucher 6 sind fest mit der Starterbatterie 2 verbunden. Ebenso sind die Bordnetzverbraucher 8 fest mit der Bordnetzbatterie 3 und diese mit dem Generator 5 verbunden. Die startrelevanten Verbraucher 7 sind über ein Relais K1 mit der Starterbatterie 2 und über ein Relais K2 mit der Bordnetzbatterie 3 verbindbar. Des weiteren sind über ein drittes Relais K3, das zwischen den beiden Relais K1, K2 angeordnet ist, die Starterbatterie 2 und die Bordnetzbatterie 3 miteinander verbindbar. Das Relais K1 ist als Öffner ausgebildet, d.h. im Ruhezustand ist das Relais K1 geschlossen und somit die startrelevanten Verbraucher 7 mit der Starterbatterie 2 verbunden. Die Relais K2 und K3 sind hingegen als Schließer ausgebildet, d.h. im Ruhezustand sind die Starterbatterie 2 und die startrelevanten Verbraucher 7 von der Bordnetzbatterie getrennt. Die elektronische Polklemme 9 ist zwischen dem Starter 4 und der Starterbatterie 2 angeordnet. Die elektronische Polklemme 9 ist vorzugsweise als schaltbarer Leistungshalbleiter ausgebildet, insbesondere als CMOS- Leistungstransistor.

Diese elektronische Polklemme 9 ist im durchgeschalteten Zustand sehr niederohmig und im gesperrten Zustand sehr hochohmig, so daß die elektronische Polklemme 9 als idealer Schalter dargestellt ist. Allerdings existiert technologisch bedingt eine parasitäre Diode, die einen parasitären Stromfluß erlaubt, weshalb bei der Verschaltung auf die Polung geachtet werden muß. Diese parasitäre Diode ist daher in Fig. 1 parallel zum idealen Schalter dargestellt, die zusammen die elektronische Polklemme 9 bilden. Die Ausführungen zu der elektronischen Polklemme 9 gelten sinngemäß auch für die elektronische Polklemme 10, die zwischen dem Starter 4 und der Bordnetzbatterie 3 angeordnet ist. Die feste Zuordnung der Hochlaststartverbraucher 6 zur Starterbatterie 2 hat den Vorteil, daß das Relais K1 nicht den hohen Strom tragen muß, so daß dieses entsprechend geringer dimensionierbar ist. Prinzipiell könnten jedoch die Hochlaststartverbraucher 6 über das Relais K1 geschaltet werden, wenn das Relais K1 entsprechend dimensioniert wird.

Bevor der Verbrennungsmotor gestartet wird, sind die beiden elektrischen Polklemmen 9, 10 offen und somit die Starterleitung 11 spannungslos. Die Relais K1- K3 sind im Ruhezustand, so daß die startrelevanten Verbraucher 7 mit der Starterbatterie 2 verbunden sind und die Starterbatterie 2 und die Bordnetzbatterie 3 voneinander getrennt sind.

Die Schaltung der Relais K1- K3 in der Start- und Betriebsphase ist abhängig vom Ladezustand der Starterbatterie 2 und der Bordnetzbatterie 3. Diese Lade- und Bordnetzzustände können auf verschiedene Arten bestimmt werden. Im einfachsten Fall übernimmt diese Aufgabe ein nicht dargestelltes Bordnetzsteuergerät, das seine Informationen aus vorhandenen Daten im Bordnetz über einen CAN- Bus und durch Batteriespannungsmessungen bezieht.

Vor der Startphase werden daher zunächst die Ladezustände erfaßt. Ergibt diese Prüfung, daß der Ladezustand der Starterbatterie 2 für den Startvorgang ausreichend ist, so bleiben die Relais K1- K3 in ihrer Ruhestellung. Zum Ansteuern des Starters 4 gibt es dann zwei prinzipielle Vorgehensweisen. Einerseits können stets beide elektrischen Polklemmen 9, 10 durchgeschaltet werden, so daß die Spannungsversorgung für den Starter 4 sowohl von der Starterbatterie 2 als auch von der Bordnetzbatterie 3 übernommen wird. Alternativ kann auch im Regelfall nur die elektronische Polklemme 9 durchgeschaltet werden, wohingegen die Bordnetzbatterie 3 nur im Falle des Kaltstarts durch die elektronische Polklemme 10 zugeschaltet wird. Prinzipiell ist es jedoch möglich, aus nur jeweils einer oder aus beiden Batterien zusammen zu starten.

Ergibt hingegen die Prüfung der Ladezustände, daß der Ladezustand der Starterbatterie nicht ausreichend ist, weil beispielsweise eine zu geringe Spannung oder ein bereits erfolgloser Startversuch erfaßt wurde, so müssen die startrelevanten Verbraucher 7 durch die Bordnetzbatterie 3 versorgt werden. Hierzu muß das Relais K2 geschlossen und das Relais K1 geöffnet werden. Die Reihenfolge ist dabei einzuhalten, damit die startrelevanten Verbraucher, die auch Steuergeräte umfassen, nicht kurzzeitig von der Spannungsversorgung getrennt sind. Das Relais K3 bleibt weiter offen und wird somit nicht durch die hohen Startströme belastet. Anschließend werden die beiden elektronischen Polklemmen 9, 10 geschlossen. Dabei liefert die Bordnetzbatterie 3 über die elektronische Polklemme 10 die Betriebsspannung für den Starter 4 und über die durchgeschaltete elektronische Polklemme 9 die Versorgungsspannung für die Hochlaststartverbraucher 6. Prinzipiell müßte hierzu die elektronische Polklemme 9 nicht durchgeschaltet werden, da die parasitäre Diode in Flußrichtung gepolt ist, jedoch ist im allgemeinen deren Stromtragfähigkeit für die Hochlaststartverbraucher 6 nicht ausreichend. Die beiden elektronischen Polklemmen 9, 10 bleiben solange durchgeschaltet, bis die Hochlaststartverbraucher 6 an der Starterbatterie 2 nicht mehr aktiv sind.

Nachdem der Startvorgang abgeschlossen ist, muß dafür gesorgt werden, daß die Starterbatterie 2 nicht mehr belastet wird. Das hierfür nötige Schalten ist dabei davon abhängig, wie der Startvorgang vorgenommen wurde.

Bei einem Startvorgang aus der Startbatterie und gegebenenfalls Bordnetzbatterie werden nach dem Startvorgang die beiden elektronischen Polklemmen 9, 10 abgeschaltet. Somit ist der Starter 4 und die Starterleitung 11 spannungslos geschaltet. Es muß eine gewisse Zeit abgewartet werden, bis die Hochlaststartverbraucher 6 an der Starterbatterie 2 ihre Leistung reduziert haben. Nachdem der Generator 5 erregt ist und seine Ladefunktion für die Bordnetzbatterie 3 aufgebaut hat, müssen die Relais K2 und K3 geschlossen werden. Danach wird das Relais K1 geöffnet. Eine unbedingte Voraussetzung ist, daß zuerst K2 geschlossen und dann K1 geöffnet wird. Dieses ist durch mechanische, elektrische und/oder softwaremäßige Verriegelung erreichbar. Mit diesem Schaltvorgang sind die startrelevanten Verbraucher 7 auf die Bordnetzbatterie 3 umgeschaltet und die Starterbatterie 2 wird über K3 geladen. Ermittelt nun das Bordnetzsteuergerät durch Spannungsmessung an der Starterbatterie 2, daß diese durch das stark belastete Bordnetz entladen wird, so wird K3 geöffnet und damit die Entladung verhindert. Durch die Spannungsmessung an der Bordnetzbatterie 3 erkennt das Bordnetzsteuergerät wiederum, ab wann das Bordnetz nicht mehr so stark belastet ist und schaltet dann über K3 die Starterbatterie 2 zur Ladung wieder zu. Bei einem Startvorgang aus der Bordnetzbatterie 3 ist das Verfahren prinziell gleich, nur daß das Umschalten der startrelevanten Verbraucher auf die Bordnetzbatterie 3 vor dem Startvorgang geschehen ist. Die Ansteuerung des Relais K3 ist jedoch identisch. Nach der Abschaltung des Verbrennungsmotors werden alle Relais K1, K2, K3 in ihren Ruhezustand versetzt. Somit ist die Starterbatterie 2 vom Bordnetz getrennt und kann durch Verbraucher in der Standphase nicht entladen werden.

Eine weitere vorteilhafte Ausgestaltung zur Steuerung der Relais K1-3 ist die Verwendung eines steuerbaren Generators 5. Ein Generator 5 mit steuerbarem Regler kann seine Spannung einstellen. Wird diesem Generator 5 also von einem Steuergerät seine Ausgangsspannung vorgegeben, ist es möglich, das Relais K3 nahezu ohne Laststrom zu schalten. Hierzu wird im Idealfall auf beiden Seiten des Relais die gleiche Spannung vorgegeben. Die eine Seite bestimmt die Starterbatterie 2 und die andere Seite wird dementsprechend vom Generator 5 angepaßt, wobei die Reduzierung der Generatorausgangsspannung durch die höchste auftretende Batteriespannung begrenzt ist. Somit kann kein großer Stromfluß während der Schaltphase auftreten.

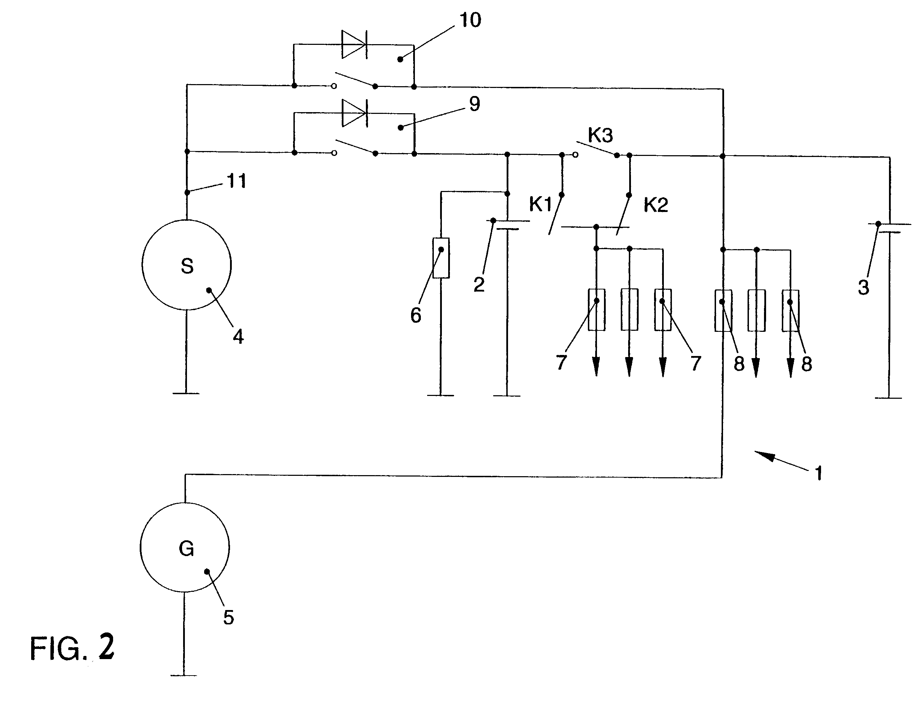

In der Fig. 2 ist eine alternative Ausführungsform dargestellt. Einziger Unterschied im Vergleich zur Schaltungsvariante gemäß Fig. 1 ist, daß das Relais K1 als Schließer und das Relais K2 als Öffner ausgebildet sind. Somit werden die startrelevanten Verbraucher im Ruhezustand der Bordnetzbatterie 3 zugeordnet. Wie in den zuvor dargestellten Beispielen wird vor Einleitung des Startvorganges der Ladezustand der beiden Batterien beispielsweise mittels einer Spannungsmessung durch das Bordnetzsteuergerät vorgenommen. Ergibt diese Überprüfung, daß die Bordnetzbatterie 3 ausreichend geladen ist, so bleiben die Relais K1-K3 in ihrem Ruhezustand. Ist hingegen die Starterbatterie 2 geladen und die Bordnetzbatterie 3 entladen, so werden die startrelevanten Verbraucher 7 auf die Starterbatterie 2 geschaltet. Hierzu wird das Relais K2 geöffnet und anschließend das Relais K1 geschlossen. Diese Reihenfolge ist einzuhalten, um Ausgleichsströme zwischen der Starterbatterie 2 und der entladenen Bordnetzbatterie 3 zu verhindern. Sind hingegen beide Batterien entladen, so gibt es prinzipiell zwei Möglichkeiten. Zum einen können dann die startrelevanten Verbraucher 7 der Bordnetzbatterie 3 zugeordnet bleiben. In diesem Fall wird dann über den Fremdstarthilfepunkt die Starterbatterie2 aufgeladen. Bei einem erneuten Startversuch wird dann die geladene Starterbatterie 2 vom Bordnetzsteuergerät erkannt und die startrelevanten Verbraucher 7 auf die Starterbatterie geschaltet. Im anderen Fall werden nach einem vergeblichen Startversuch die startrelevanten Verbraucher 7 sofort der Starterbatterie 2 zugeordnet, so daß durch die externe Batterie der Fremdstart sofort erfolgen kann. Des weiteren können die startrelevanten Verbraucher 7 auch stets der Batterie mit dem besseren Ladezustand zugeordnet werden.

Allgemein gilt für alle Schaltvarianten, daß die Auswertung der Batteriezustände und die gegebenenfalls notwendige Verschaltung der Relais nur bei stehendem Motor erfolgen darf. Daher muß nach der Verschaltung ein Sperrbit gesetzt werden, welches eine erneute Ladeklassifizierung verhindert. Dieses Sperrbit wird nur zurückgesetzt, wenn das Bordnetzsteuergerät in einem Sleep-Mode geschaltet wird oder die Klemme 15 ein- und ausgeschaltet wird.

Nachdem der Generator 5 erregt ist, werden alle Relais K1-K3 geschlossen, wobei die beiden jeweils offenen Relais K1, K3 bzw. K2, K3 gleichzeitig geschlossen werden, so daß die Starterbatterie 2 geladen wird, wobei durch das höhere Potential am Generatorausgang sichergestellt ist, daß ein gerichteter Stromfluß vom Generator zur Bordnetzbatterie 3 und zur Starterbatterie 2 erfolgt und Ausgleichsströme zwischen den Batterien vermieden werden. Soweit die Starterbatterie 2 ausreichend geladen ist bzw. soweit der Bordnetzzustand die Starterbatterie 2 belasten könnte, werden die Relais K1 und K3 in dieser Reihenfolge geöffnet.

## Patentansprüche

1. Zwei-Batteriensystem (1), umfassend eine Starterbatterie (2) und eine Bordnetzbatterie (3), einen Starter (4) und elektrische Verbraucher (6-8), die in startrelevante Verbraucher (6, 7) und Bordnetzverbraucher (8) unterteilt sind, wobei zwischen Starter (4) und der Starterbatterie (2) mindestens ein erster Startschalter (9) angeordnet ist,
wobei zwischen der Starterbatterie (2) und den startrelevanten Verbrauchern (7) ein erstes, elektrisch vollsperrbares Schalterelement (K1) und
zwischen der Bordnetzbatterie. (3) und den startrelevanten Verbrauchern (7) ein zweites, elektrisch vollsperrbares Schaltelement (K2) angeordnet sind,
zwischen der Starterbatterie (2) und der Bordnetzbatterie (3) ein Element (K3) angeordnet ist, das einen Stromfluss von der Starterbatterie (2) zur Bordnetzbatterie (3) und den Bordnetzverbrauchern (8) verhindert, wobei die startrelevanten Verbraucher (7) im Ruhezustand der Bordnetzbatterie oder der Starterbatterie (2, 3) zugeordnet sind, wobei zur Einleitung eines Startvorganges die Ladezustände der Bordnetzbatterie und der Starterbatterie (2, 3) erfasst werden und die startrelevanten Verbraucher (7) in Abhängigkeit der Ladezustände der Bordnetzbatterie und der Starterbatterie (2, 3) einer der beiden Batterien (2, 3) zugeordnet werden, wobei die Zuordnung der startrelevanten Verbraucher (7) durch die ersten und zweiten elektrisch vollsperrbaren Schalterelemente erfolgt,
**dadurch gekennzeichnet, dass**
zwischen dem Starter (4) und der Bordnetzbatterie (3) ein zweiter Startschalter (10) angeordnet ist und nach Beendigung des Startvorganges die startrelevanten Verbraucher (7) der Bordnetzbatterie (3) zugeordnet sind, wobei bei notwendigen Schaltvorgängen des ersten und zweiten elektrisch vollsperrbaren Schaltelementes (K1, K2) nach der Startphase das erste Schaltelement erst nach Schließen des zweiten Schaltelementes (K2) geöffnet wird.

2. Zwei-Batteriensystem nach Anspruch 1, **dadurch gekennzeichnet, dass** die vollsperrbaren Schaltelemente als Relais (K1, K2) ausgebildet sind.

3. Zwei-Batteriensystem nach Anspruch 2, **dadurch gekennzeichnet, dass** das erste Relais (K1) als Öffner und das zweite Relais (K2) als Schließer ausgebildet ist.

4. Zwei-Batteriensystem nach einem der vorangegangenen Ansprüche, **dadurch gekennzeichnet, dass** der erste und zweite Startschalter als elektronische Polklemmen (9, 10) ausgebildet sind.

5. Zwei-Batteriensystem nach Anspruch 4, **dadurch gekennzeichnet, dass** die elektronischen Polklemmen (9; 10) als schaltbare Leistungshalbleiter, insbesondere als CMOS-Feldeffekttransistoren, ausgebildet sind.

6. Zwei-Batteriensystem nach einem der vorangegangenen Ansprüche, **dadurch gekennzeichnet, dass** das zwischen Starterbatterie (2) und Bordnetzbatterie (3) angeordnete Element (K3) als Diode D1 oder als Relais ausgebildet ist.

7. Zwei-Batteriensystem nach einem der vorangegangenen Ansprüche, **dadurch gekennzeichnet, dass** der Starterbatterie (2) ein Abgriff zugeordnet ist, mittels dessen eine externe Batterie zuschaltbar ist.

8. Zwei-Batteriensystem nach einem der vorangegangenen Ansprüche, **dadurch gekennzeichnet, dass** Hochlaststartverbraucher (6) fest der Starterbatterie (2) zugeordnet sind.

9. Zwei-Batteriensystem nach einem der vorangegangenen Ansprüche, **dadurch gekennzeichnet, dass** die Steuerung der Schaltelemente und/oder Elemente durch ein Bordnetzsteuergerät erfolgt.

10. Verfahren zum Starten eines Kraftfahrzeuges mittels eines Zwei-Batteriensystems nach Anspruch 1, umfassend folgende Verfahrensschritte:
a) Erfassen der Ladezustände der Starterbatterie (2) und der Bordnetzbatterie (3) vor Einleitung des Startvorganges,
b) Zuordnen der startrelevanten Verbraucher (7) der Batterie, aus der die startrelevanten Verbraucher (7) während des Startvorganges versorgt werden sollen durch Verschalten der ersten und zweiten elektrisch vollsperrbaren Schalterelemente (K1; K2),
c) Durchschalten der Starterschalter (9; 10), aus deren zugeordneter Starterbatterie oder Bordnetzbatterie der Starter versorgt werden soll, wobei die Starterschalter solange durchgeschaltet bleiben, bis Hochlaststartverbraucher (6) deaktiviert sind und
d) Zuordnen der startrelevanten Verbraucher (7) der Bordnetzbatterie (3) nach Beendigung des Startvorganges, wobei bei notwendigen Schaltvorgängen des ersten und zweiten elektrisch vollsperrbaren Schaltelementes (K2) nach der Startphase das erste vollsperrbare Schaltelement (K1) erst geöffnet wird, wenn zuvor das zweite Schaltelement geschlossen wurde.

11. Verfahren nach Anspruch 10, **dadurch gekennzeichnet, dass** die startrelevanten Verbraucher (7) im Ruhezustand der Starterbatterie (2) zugeordnet sind, wobei die Umschaltung auf die Bordnetzbatterie (3) vor der Startphase nur erfolgt, wenn die startrelevanten Verbraucher (7) nur durch die Bordnetzbatterie (3) versorgt werden können.

12. Verfahren nach Anspruch 10, **dadurch gekennzeichnet, dass** die startrelevanten Verbraucher (7) im Ruhezustand der Bordnetzbatterie (3) zugeordnet sind, wobei die Umschaltung auf die Starterbatterie (2) nur erfolgt, wenn die startrelevanten Verbraucher nicht durch die Bordnetzbatterie versorgt werden können.

13. Verfahren nach einem der Ansprüche 10 bis 12, **dadurch gekennzeichnet, dass** immer aus der Starterbatterie (2) und der Bordnetzbatterie (3) gestartet wird.

14. Verfahren nach einem der Ansprüche 10 bis 13 mittels eines steuerbaren Generators (5), **dadurch gekennzeichnet, dass** vor Schaltvorgängen der vollsperrbaren Schaltelemente (K1; K2) oder Elemente (K3) die Generatorspannung zur Reduzierung von Schaltlastströmen an die Starterbatteriespannung (2) angepasst wird.

## Claims

1. Dual-battery system (1) comprising a starter battery (2) and a vehicle power supply system battery (3), a starter (4) and electrical loads (6-8) which are subdivided into loads (6, 7) which are relevant for starting and vehicle power supply system loads (8) with at least one first starting switch (9) being arranged between the starter (4) and the starter battery (2),
with a first switch element (K1), which can be fully locked electrically being arranged between the starter battery (2) and the loads (7) which are relevant for starting, and
with a second switching element (K2), which can be fully locked electrically being arranged between the vehicle power supply system battery (3) and the loads (7) which are relevant for starting,
with an element (K3) being arranged between the starter battery (2) and the vehicle power supply system battery (3) in order to prevent current from flowing from the starter battery (2) to the vehicle power supply system battery (3) and to the vehicle power supply system loads (8) with the loads (7) which are relevant for starting being associated in the rest state with the vehicle power supply system battery or with the starter battery (2, 3) with the states of charge of the vehicle power supply system battery and of the starter battery (2, 3) being recorded in order to initiate a starting process, and with the loads (7) which are relevant for starting being associated with one of the two batteries (2, 3) depending on the states of charge of the vehicle power supply system battery and of the starter battery (2, 3), and with the association with the loads (7) which are relevant for starting being carried out by means of the first and second switch elements which can be fully locked electrically,
**characterized in that**
a second starting switch (10) is arranged between the starter (4) and the vehicle power supply system battery (3) and, after completion of the starting process, associates the loads (7) which are relevant for starting with the vehicle power supply system battery (3), with the first switching element being opened only after the second switching element (K2) has been closed during the necessary switching process of the first and second switching element (K1, K2), which can be fully locked electrically, after the starting phase.

2. Dual-battery system according to Claim 1, **characterized in that** the switching elements which can be fully locked are in the form of relays (K1, K2).

3. Dual-battery system according to Claim 2, **characterized in that** the first relay (K1) is in the form of a break contact, and the second relay (K2) is in the form of a make contact.

4. Dual-battery system according to one of the preceding claims, **characterized in that** the first and the second starting switches are in the form of electronic pole terminals (9, 10).

5. Dual-battery system according to Claim 4, **characterized in that** the electronic pole terminals (9; 10) are in the form of switchable power semiconductors, in particular CMOS field-effect transistors.

6. Dual-battery system according to one of the preceding claims, **characterized in that** the element (K3) which is arranged between the starter battery (2) and the vehicle power supply system battery (3) is in the form of a diode D1 or a relay.

7. Dual-battery system according to one of the preceding claims, **characterized in that** the starter battery (2) has an associated tap, by means of which an external battery can be connected.

8. Dual-battery system according to one of the preceding claims, **characterized in that** high-load starting loads (6) are permanently associated with the starter battery (2).

9. Dual-battery system according to one of the preceding claims, **characterized in that** the switching element and/or elements are controlled by means of a vehicle power supply system controller.

10. Method for starting a motor vehicle by means of a dual-battery system according to Claim 1, comprising the following method steps:
a) recording of the states of charge of the starter battery (2) and of the vehicle power supply system battery (3) before the initiation of the starting process,
b) association of the loads (7) which are relevant for starting with that battery from which the loads (7) which are relevant for starting are intended to be supplied during the starting process, by switching of the first and second switch elements (K1; K2) which can be fully locked electrically,
c) switching of the starter switches (9; 10) from whose associated starter battery or vehicle power supply system battery the starter is intended to be supplied, with the starter switches remaining switched on until the high-load starting loads (6) are deactivated, and
d) association of the loads (7) which are relevant for starting with the vehicle power supply system battery (3) after completion of the starting process, with the first switching element (K1) which can be fully locked being opened only once the second switching element has previously been closed during any necessary switching processes of the first and second switching element (K2) which can be fully locked electrically, after the starting phase.

11. Method according to Claim 10, **characterized in that** the loads (7) which are relevant for starting are, in the rest state, associated with the starter battery (2), with the switching to the vehicle power supply system battery (3) before the starting phase taking place only if the loads (7) which are relevant for starting can be supplied only by the vehicle power supply system battery (3).

12. Method according to Claim 10, **characterized in that** the loads (7) which are relevant for starting are associated, in the rest state, with the vehicle power supply system battery (3), with the switching to the starter battery (2) taking place only if the loads which are relevant for starting cannot be supplied by the vehicle power supply system battery.

13. Method according to one of Claims 10 to 12, **characterized in that** starting is always carried out from the starter battery (2) and from the vehicle power supply system battery (3).

14. Method according to one of Claims 10 to 13 by means of a controllable generator (5), **characterized in that**, before switching processes of the switching elements (K1; K2) which can be fully locked or of the elements (K3), the generator voltage is matched to the starter battery voltage (2) in order to reduce switching load currents.

## Revendications

1. Système à deux batteries (1) comprenant une batterie de démarrage (2) et une batterie de réseau embarqué (3), un démarreur (4) et des appareillages électriques (6-8), lesquels sont divisés en appareillages intervenant dans le démarrage (6, 7) et en appareillages du réseau embarqué (8), au moins un premier commutateur de démarrage (9) étant disposé entre le démarreur (4) et la batterie de démarrage (2), un premier élément de commutation à coupure électrique totale (K1) étant disposé entre la batterie de démarrage (2) et les appareillages intervenant dans le démarrage (7) et un deuxième élément de commutation à coupure électrique totale (K2) étant disposé entre la batterie de réseau embarqué (3) et les appareillages intervenant dans le démarrage (7), entre la batterie de démarrage (2) et la batterie de réseau embarqué (3) est disposé un élément (K3) qui empêche une circulation . du courant de la batterie de démarrage (2) vers la batterie de réseau embarqué (3) et les appareillages du réseau embarqué (8), les appareillages intervenant dans le démarrage (7) en position de repos étant affectés à la batterie de réseau embarqué ou à la batterie de démarrage (2, 3), les états de charge de la batterie de réseau embarqué et de la batterie de démarrage (2, 3) étant détectés pour initier un processus de démarrage et les appareillages intervenant dans le démarrage (7) étant affectés à l'une des deux batteries (2, 3) en fonction de l'état de charge de la batterie de réseau embarqué et de la batterie de démarrage (2, 3), l'affectation des appareillages intervenant dans le démarrage (7) étant réalisée par les premier et deuxième éléments de commutation à coupure électrique totale, **caractérisé en ce qu'**un deuxième commutateur de démarrage (10) est disposé entre le démarreur (4) et la batterie de réseau embarqué (3) et après la fin du processus de démarrage les appareillages intervenant dans le démarrage (7) sont affectés à la batterie de réseau embarqué (3), le premier élément de commutation n'étant ouvert qu'après la fermeture du deuxième élément de commutation (K2) lors des opérations de commutation nécessaires des premier et deuxième éléments de commutation à coupure électrique totale (K1, K2) après la phase de démarrage.

2. Système à deux batteries selon la revendication 1, **caractérisé en ce que** les éléments de commutation à coupure totale sont réalisés sous la forme de relais (K1, K2).

3. Système à deux batteries selon la revendication 2, **caractérisé en ce que** le premier relais (K1) est réalisé sous la forme d'un contact fermé au repos et le deuxième relais (K2) sous la forme d'un contact ouvert au repos.

4. Système à deux batteries selon l'une des revendications précédentes, **caractérisé en ce que** le premier et le deuxième commutateur de démarrage sont réalisés sous la forme de bornes polarisées électroniques (9, 10).

5. Système à deux batteries selon la revendication 4, **caractérisé en ce que** les bornes polarisées électroniques (9, 10) sont réalisées sous la forme de semiconducteurs de puissance commandables, notamment sous la forme de transistors à effet de champ CMOS.

6. Système à deux batteries selon l'une des revendications précédentes, **caractérisé en ce que** l'élément (K3) disposé entre la batterie de démarrage (2) et la batterie de réseau embarqué (3) est réalisée sous la forme d'une diode D1 ou d'un relais.

7. Système à deux batteries selon l'une des revendications précédentes, **caractérisé en ce qu'**à la batterie de démarrage (2) est associée une prise à l'aide de laquelle peut être raccordée une batterie externe.

8. Système à deux batteries selon l'une des revendications précédentes, **caractérisé en ce que** les appareillages de démarrage à forte charge (6) sont affectés à demeure à la batterie de démarrage (2).

9. Système à deux batteries selon l'une des revendications précédentes, **caractérisé en ce que** la commande des éléments de commutation et/ou des éléments s'effectue par le biais d'un appareil de commande de réseau embarqué.

10. Procédé de démarrage d'un véhicule automobile au moyen d'un système à deux batteries selon la revendication 1, comprenant les étapes suivantes :
a) détection de l'état de charge de la batterie de démarrage (2) et de la batterie de réseau embarqué (3) avant d'initier le processus de démarrage,
b) affectation des appareillages intervenant dans le démarrage (7) à la batterie à partir de laquelle les appareillages intervenant dans le démarrage (7) doivent être alimentés pendant le processus de démarrage en commutant les premier et deuxième éléments de commutation à coupure électrique totale (K1, K2),
c) basculement des commutateurs de démarrage (9, 10), dont la batterie de démarrage ou la batterie de réseau embarqué qui leur est affectée doit alimenter le démarreur, les commutateurs de démarrage restant basculés tant que les appareillages de démarrage à forte charge (6) sont désactivés et
d) affectation des appareillages intervenant dans le démarrage (7) à la batterie de réseau embarqué (3) après la fin du processus de démarrage, le premier élément de commutation à coupure électrique totale (K1) n'étant ouvert qu'après la fermeture du deuxième élément de commutation lors des opérations de commutation nécessaires des premier et deuxième éléments de commutation à coupure électrique totale (K2) après la phase de démarrage.

11. Procédé selon la revendication 10, **caractérisé en ce que** les appareillages intervenant dans le démarrage (7) en position de repos sont affectés à la batterie de démarrage (2), le basculement sur la batterie de réseau embarqué (3) avant la phase de démarrage n'ayant lieu que lorsque les appareillages intervenant dans le démarrage (7) ne peuvent être alimentés que par la batterie de réseau embarqué (3).

12. Procédé selon la revendication 10, **caractérisé en ce que** les appareillages intervenant dans le démarrage (7) en position de repos sont affectés à la batterie de réseau embarqué (3), le basculement sur la batterie de démarrage (3) n'ayant lieu que lorsque les appareillages intervenant dans le démarrage ne peuvent pas être alimentés par la batterie de réseau embarqué.

13. Procédé selon l'une des revendications 10 à 12, **caractérisé en ce que** le démarrage s'effectue toujours à partir de la batterie de démarrage (2) et de la batterie de réseau embarqué (3).

14. Procédé selon l'une des revendications 10 à 13 au moyen d'un alternateur commandable (5), **caractérisé en ce que** la tension de l'alternateur est adaptée à la tension de la batterie de démarrage (2) avant les opérations de commutation des premier et deuxième éléments de commutation à coupure totale (K1, K2) ou de l'élément (K3) afin de réduire les courants de charge de commutation.
